# EUROPEAN PATENT SPECIFICATION

(11) **EP 4 075 224 B1**
(45) Date of publication and mention of the grant of the patent: **20.12.2023**
(21) Application number: 21213920.8
(22) Date of filing: 12.12.2021
(51) Int. Cl.: G05D 1/00

(54) **WORK MACHINE CAPABLE OF AUTONOMOUS TRAVEL**
ARBEITSMASCHINE MIT FÄHIGKEIT ZUM AUTONOMEN FAHREN
MACHINE DE TRAVAIL APTE AU DÉPLACEMENT AUTONOME

(30) Priority: 12.04.2021 JP 2021067134
(43) Date of publication of application: 19.10.2022
(73) Proprietor: Kubota Corporation, Osaka-shi, Osaka 556-8601 (JP)
(72) Inventor: MANJI, Yasuhiro, SAKAI-SHI, OSAKA, 5900823 (JP); HISAKUNI, Tomohiko, SAKAI-SHI, OSAKA, 5900823 (JP)
(74) Representative: Cabinet Beau de Loménie

(56) References cited:
- EP-A1- 3 491 906
- WO-A1-2020/122583
- DE-A1-102018 112 145

## Description

### Cross Reference to Related Application

This application is based on and claims priority under 35 U.S.C. Section 119 to Japanese Patent Application No. 2021-067134 filed on April 12, 2021.

### Field of the invention

The present invention relates to a technique of causing a work machine capable of autonomous travel to travel under appropriate conditions for autonomous travel.

### Description of the related art

Japanese Patent Publication No. 6232122 discloses a work vehicle having a function of preventing autonomous travel from being started in response to an erroneous operation by a human work manager. The work vehicle includes a controller that stores an autonomous travel program for autonomous travel, and also includes an attachment detector configured to detect attachment to the vehicle of a unit including a communicator capable of communicating with an operation terminal and a receiver configured to receive signals from satellites. The controller prohibits autonomous travel unless the attachment detector detects attachment of the unit to the vehicle. Starting autonomous travel requires a human work manager to attach the unit to the vehicle and then provide an instruction to start autonomous travel. Document DE102018112145 presents an example embodiment of known structure for a work vehicle.

### Summary of Invention

Work machines such as mowers, rice transplanters, and harvesters have travel parameters such as the travel speed and work parameters such as the operation speed of an implement. Those travel and work parameters depend on the work area, and thus need to be set appropriately before the start of work travel. The work vehicle disclosed in Japanese Patent Publication No. 6232122 is configured to be permitted to travel autonomously under the mere condition of a human work manager attaching the unit to the vehicle and providing an instruction to start autonomous travel. This may result in the work vehicle starting autonomous travel under unintended travel control conditions (including travel parameters and work parameters).

It is an object of the present invention to provide a work machine capable of autonomous travel which work machine is prohibited from performing unintended autonomous travel.

A work machine capable of autonomous travel as per the invention is defined in claim 1.

The work machine is permitted to travel autonomously under the condition that the control terminal is capable of exchanging data with the travel manager. The work machine starts autonomous travel through the following procedure: A human work manager operates the control terminal to access the travel manager in order to download information on the travel control conditions from the work machine and cause the display to show the information. The human work manager then checks the travel control conditions before providing an autonomous travel start instruction from the control terminal to the travel manager. The above configuration allows the human work manager to check the travel control conditions for autonomous travel of the work machine in advance. This prevents the work machine from starting unintended autonomous travel.

The work machine may be arranged such that the autonomous travel assistant supplies the travel manager with travel control condition overwriting data for overwriting the at least one travel control condition set by the travel control condition setter. This arrangement allows the human work manager to, if the travel control conditions shown by the display are not intended by the human work manager, use the control terminal to supply the travel manager with travel control condition overwriting data for overwriting the travel control conditions. This ensures that the work machine travels autonomously under desired travel control conditions.

The work machine may be arranged such that the control terminal is detachably attachable to the body. This arrangement allows the human work manager to be away from the work machine when operating the control terminal for autonomous travel of the work machine.

The work machine may be arranged such that the at least one travel control condition includes at least one of a travel parameter, a work parameter, the travel target, or a travelable distance. The travel parameter refers to a target value or limit value for travel control. Examples include the travel speed and turning radius. The work parameter refers to a target value or limit value for work control based on work specifications suitable for the work area. Examples include the work speed and positioning of an implement. Examples of the travel target include target coordinates and a target travel path for autonomous travel. The above arrangement allows the human work manager to check such travel control conditions before the start of autonomous travel and overwrite data on the travel control conditions as necessary to ensure that the work machine travels autonomously in a desired manner.

The work machine may be arranged such that the data communication is a wireless or wired data communication. The control terminal is, when mounted on a cradle or the like provided for the body, preferably in wired data communication with the work machine because wired data communication is more stable and, when held by the human work manager away from the work machine, preferably in wireless data communication with the work machine.

Whether the work machine is set to work appropriately can often be determined after the work machine starts work. When the human work manager has instructed the work machine to perform unattended autonomous travel, the human work manager normally monitors the autonomous travel away from the work machine. The human work manager is thus preferably able to change the travel behavior and work behavior of the work machine while being away from the work machine even after the work machine starts autonomous travel. The work machine may thus be arranged such that the autonomous travel assistant supplies the travel manager with the travel control condition overwriting data even during the autonomous travel.

The human work manager is preferably able to, in a case where the human work manager intends to change the travel behavior or work behavior of the work machine, see the autonomous travel conditions currently set for the work machine. The work machine may thus be arranged such that during the autonomous travel, the display shows the at least one travel control condition set by the travel control condition setter and the travel target set by the travel target setter.

The work machine needs a travel target such as a travel target point or a travel path for autonomous travel. Performing work throughout a work area requires a travel path covering the entire work area to be created in advance on the basis of the shape of the work area and what is involved in the work. Such a travel path may be created on the control terminal if the work area is relatively small; however, if the work area is large, or a complicated travel path is expected, creating a travel path requires high computing power, and involves use of a computer at a cloud service center or the like. The work machine may thus be arranged such that the travel target is a travel path created on the control terminal or downloaded with use of the control terminal.

The human work manager is preferably able to use the control terminal as a remote control for a quick action if, while the work machine is performing unattended autonomous travel, there is an obstacle such as a person or an animal in the travel direction of the work machine, or the work machine has started to run away. The work machine may thus be arranged such that the autonomous travel assistant is capable of instructing the autonomous travel controller through the travel manager to (i) cause the body to stop or change a travel speed thereof or (ii) adjust an operation of an implement provided for the body.

### Brief Description of Drawings

Fig. 1 is a left side view of a mower in its entirety.
Fig. 2 is a plan view of a mower in its entirety.
Fig. 3 is a functional block diagram illustrating control functions of a mower and a control terminal.
Fig. 4 is a diagram illustrating an example display screen of a control terminal.
Fig. 5 is a diagram illustrating an example display screen of a control terminal.
Fig. 6 is a diagram illustrating an example display screen of a control terminal.

### Description of Embodiments

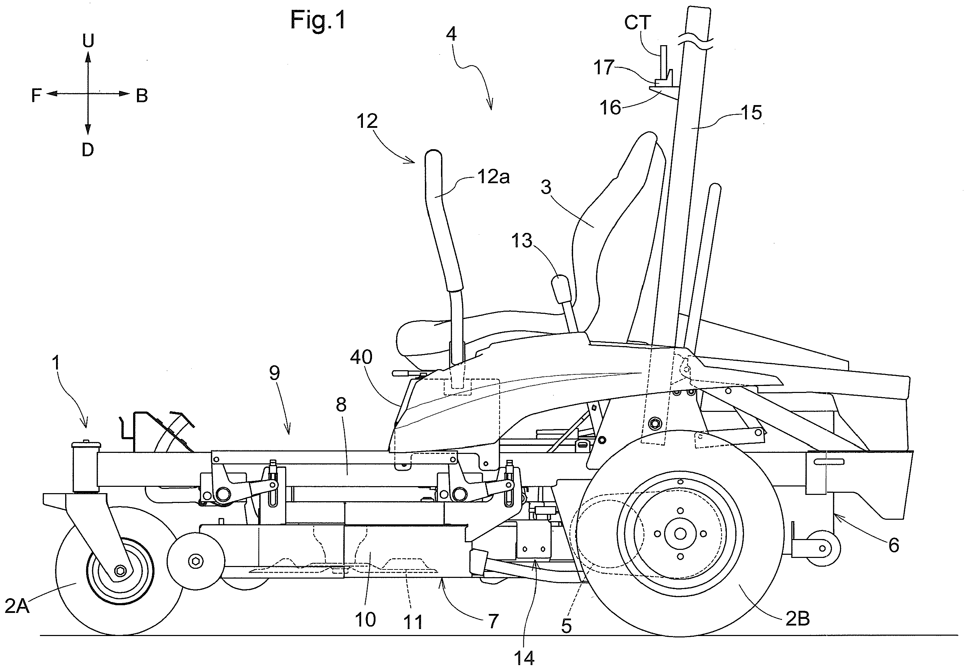

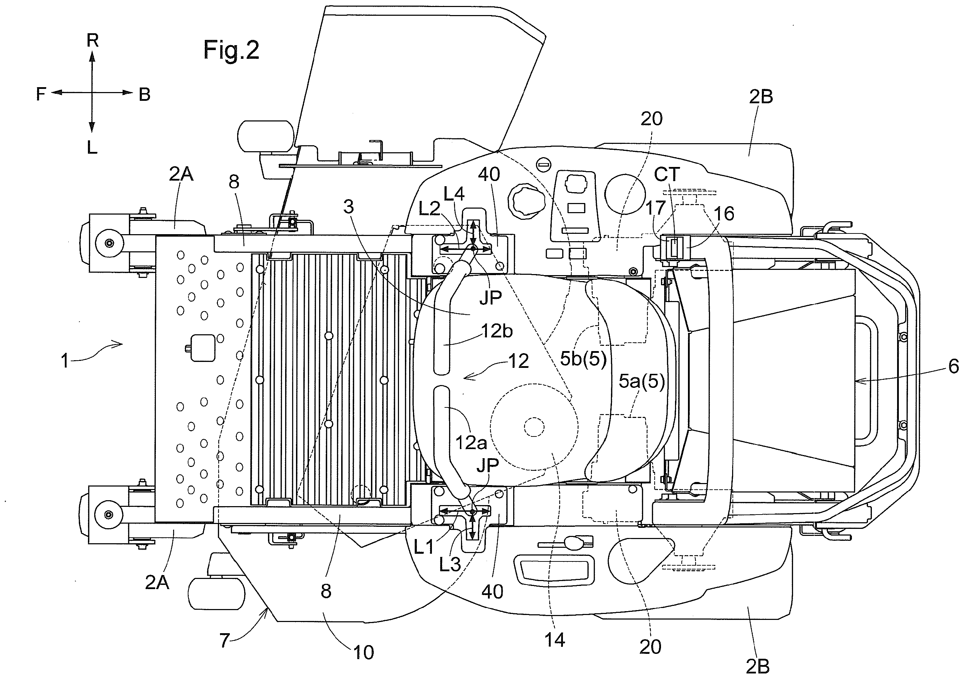

The description below deals with a mower as an embodiment of the work machine capable of autonomous travel. In the description below, arrow F shown in Figs. 1 and 2 indicates the forward direction of the body, arrow B shown in the same drawings indicates the backward direction of the body, arrow U shown in Fig. 1 indicates the upward direction of the body, arrow D shown in the same drawing indicates the downward direction of the body, arrow L shown in Fig. 2 indicates the leftward direction of the body, and arrow R shown in the same drawing indicates the rightward direction of the body.

As illustrated in Figs. 1 and 2, the mower includes a body 1 including a body frame 8 and provided with a travel device. The travel device includes a front-wheel unit 2A and a rear-wheel unit 2B. The front-wheel unit 2A includes a pair of left and right front wheels each in the form of a caster wheel. The rear-wheel unit 2B includes a left rear wheel and a right rear wheel that are drivable independently of each other. The body frame 8 is supported by the travel device on the ground. The mower includes, at a front portion of the body 1, a driver section 4 including a driver's seat 3. The mower also includes, under the driver section 4, a travel motor unit 5 including a left motor 5a and a right motor 5b that are configured to supply rotation power respectively to the left rear wheel and the right rear wheel independently of each other. The mower includes, at a back portion of the body 1, a battery pack 6 configured to supply electric power to the travel motor unit 5. The mower also includes a mowing device 7 (which is an example of the "implement") between the front-wheel unit 2A and the rear-wheel unit 2B. As illustrated in Fig. 2, the mower includes a travel transmission 20 configured to transmit power from the travel motor unit 5 to the rear-wheel unit 2B. The mower also includes a link mechanism 9 configured to be lifted and lowered relative to the body 1. The mowing device 7 as an implement is held by the body frame 8 by means of the link mechanism 9. The mower also includes a height adjustment lever 13 serving as a manual operation tool for adjustment of the mowing height and operable to operate the link mechanism 9. The mower includes a sensor (not shown in the drawings) configured to detect the mowing height for use by the control system of the mower. The link mechanism 9 may be electrically drivable. The mowing device 7 includes a cutting blade housing 10, and also includes, in the cutting blade housing 10, a cutting blade 11 rotatable about a shaft (not shown in the drawings) extending in the up-down direction of the body. The mower includes a cutting blade motor 14 configured to supply power to the cutting blade 11 for its rotation.

The mower includes a roll-over protection frame 15 standing behind the driver's seat 3 in the shape of an arch. The roll-over protection frame 15 is provided with a bracket 16. The bracket 16 is provided with a cradle 17 on which a control terminal CT is mountable. Mounting the control terminal CT on the cradle 17 allows the control terminal CT to be in wired connection with the control system of the mower in such a manner as to be capable of exchanging data with the control system through data communication. The control terminal CT is, when off the cradle 17, capable of wireless connection with the control system of the mower in the same manner. The control terminal CT is, even when on the cradle 17, capable of wireless connection with the control system of the mower in the same manner.

As illustrated in Figs. 1 and 2, the driver section 4 includes a travel operation tool unit 12 serving as a manual operation tool for adjustment of the travel speed and direction. The travel operation tool unit 12 includes a left operation lever 12a and a right operation lever 12b that are on respective opposite lateral sides of the driver's seat 3. A driver gets on and off the mower through a space between the left operation lever 12a and the right operation lever 12b and a space over a floor plate in front of the driver's seat 3.

As illustrated in Fig. 2, the left operation lever 12a and the right operation lever 12b are each swingable in the front-back direction of the body about a transverse axis (longitudinal shift) and also in the transverse direction of the body about another transverse axis (transverse shift). The description below uses the term "first path L1" to refer to the path of the longitudinal shift of the left operation lever 12a, the term "second path L2" to refer to the path of the longitudinal shift of the right operation lever 12b, the term "third path L3" to refer to the path of the transverse shift of the left operation lever 12a, and the term "fourth path L4" to refer to the path of the transverse shift of the right operation lever 12b. The first path L1 and the third path L3 intersect substantially orthogonally with each other at an intersection JP The second path L2 and the fourth path L4 intersect substantially orthogonally with each other at an intersection JP. The mower includes sensors (not shown in the drawings) configured to detect the respective shifts of the left operation lever 12a and the right operation lever 12b for use by the control system of the mower.

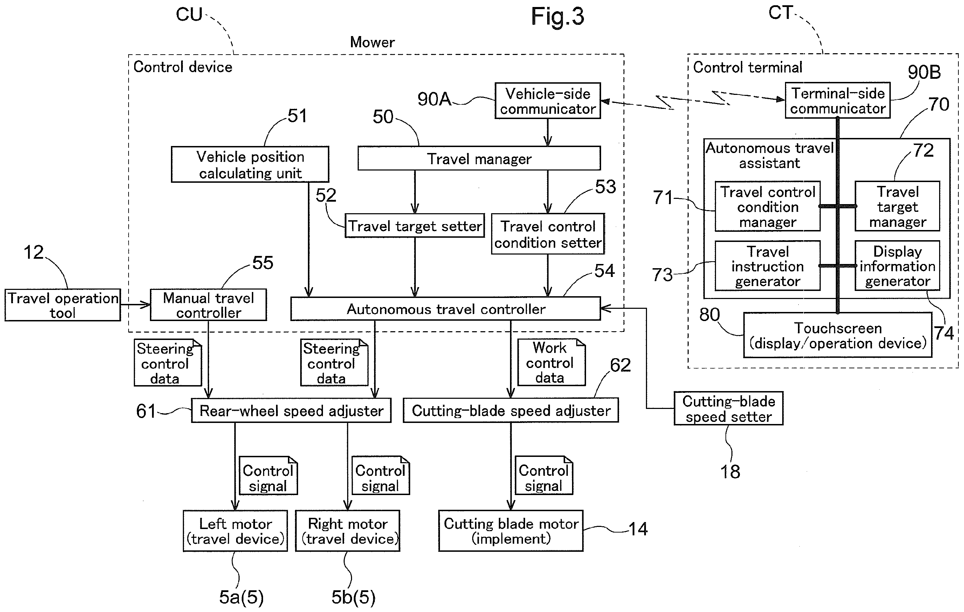

Fig. 3 is a block diagram illustrating functional sections of a control device CU and a control terminal CT both as the core of the control system of the mower. The control device CU includes a plurality of electronically controlled units. Specifically, the control device CU includes a machine position calculating unit 51, a travel target setter 52, a travel control condition setter 53, an autonomous travel controller 54, a manual travel controller 55, a travel manager 50, and a vehicle-side communicator 90A.

The machine position calculating unit 51 calculates the position of the body 1 (machine position). The machine position calculating unit 51 for the present embodiment calculates map coordinates (that is, work area coordinates or geodetic coordinates) with use of satellite positioning. The machine position calculating unit 51 may alternatively calculate the machine position with use of a camera or a laser scanner, for example. The travel target setter 52 sets a travel target for autonomous travel. The travel target for the present embodiment is a travel path created in advance to perform work travel (that is, travel while mowing) throughout the work area. The travel target may alternatively be a combination of the target point for the first half of to-and-fro travel and the target point for the second half of it.

The travel control condition setter 53 sets travel control conditions for autonomous travel. Example travel control conditions include (i) travel parameters such as the travel speed, (ii) work parameters such as the cutting-blade rotation speed and mowing height, (iii) a travel target such as a travel path, and (iv) a travelable distance based on, for example, the battery capacity.

The autonomous travel controller 54 generates data on the basis of the travel target and the machine position for the body 1 to travel autonomously. Specifically, the autonomous travel controller 54 generates, on the basis of the target travel path set by the travel target setter 52 and the machine position and body orientation calculated by the machine position calculating unit 51, steering control data intended to overcome the positional and orientational differences for the body 1 relative to the target travel path. The autonomous travel controller 54 for the present embodiment also generates rotation control data (which is a type of work control data) intended to rotate the cutting blade 11 at the rotation speed set by a cutting-blade speed setter 18.

The autonomous travel controller 54 transmits the steering control data to a rear-wheel speed adjuster 61, which mainly includes an inverter circuit and which serves as a travel device adjuster. The rear-wheel speed adjuster 61 controls the respective rotations of the left motor 5a and right motor 5b included in the travel motor unit 5, that is, the respective speeds of the left and right wheels of the rear-wheel unit 2B, independently of each other on the basis of the steering control data.

The manual travel controller 55 generates steering control data in response to an operation of the travel operation tool unit 12. Specifically, the manual travel controller 55 generates steering control data intended to increase (i) the forward rotation speed of the left rear wheel of the rear-wheel unit 2B in response to the left operation lever 12a being shifted forward of the intersection JP along the first path L1 and (ii) the backward rotation speed of the left rear wheel in response to the left operation lever 12a being shifted backward of the intersection JP along the first path L1. Similarly, the manual travel controller 55 generates steering control data intended to increase (i) the forward rotation speed of the right rear wheel of the rear-wheel unit 2B in response to the right operation lever 12b being shifted forward of the intersection JP along the second path L2 and (ii) the backward rotation speed of the right rear wheel in response to the right operation lever 12b being shifted backward of the intersection JP along the second path L2. The respective intersections JP for the left operation lever 12a and the right operation lever 12b each correspond to the neutral position; when the left operation lever 12a and the right operation lever 12b are each at the intersection JP, the travel motor unit 5 is in a neutral state.

The autonomous travel controller 54 transmits the rotation control data to a cutting-blade speed adjuster 62, which mainly includes a inverter circuit and which serves as an implement adjuster. The cutting-blade speed adjuster 62 controls the rotation of the cutting blade motor 14 on the basis of the rotation control data. The autonomous travel controller 54 has either or both of (i) a mode in which the autonomous travel controller 54 allows the travel speed and the cutting-blade speed to be adjusted in proportion to each other and (ii) a mode in which the autonomous travel controller 54 allows the traveling speed and the cutting-blade speed to be adjusted independently of each other.

The travel manager 50 manages the travel target setter 52 and the travel control condition setter 53. Specifically, the travel manager 50 manages, for example, setting of a travel target by the travel target setter 52 or setting of travel control conditions by the travel control condition setter 53 on the basis of an operation input by a human work manager or an instruction from the control terminal CT.

The control terminal CT includes (i) a terminal-side communicator 90B capable of exchanging data with the vehicle-side communicator 90A included in the control device CU of the mower and (ii) a touchscreen 80 functioning as a display and an operation input device. The control terminal CT may be in the form of, for example, a tablet computer or a smartphone.

The control terminal CT further includes an autonomous travel assistant 70 having substantially software-implemented functions. The autonomous travel assistant 70 exchanges data with the control device CU through the vehicle-side communicator 90A and the terminal-side communicator 90B. The autonomous travel assistant 70 has (i) a function of downloading information on the travel control conditions set by the travel control condition setter 53 and causing the touchscreen 80 to display the information and (ii) a function of generating travel control condition overwriting data for overwriting the travel control conditions set by the travel control condition setter 53 and transmitting the data to the travel manager 50. The autonomous travel assistant 70 also has (i) a function of downloading information on the travel target set by the travel target setter 52 and causing the touchscreen 80 to display the information and (ii) a function of generating travel target overwriting data for overwriting the travel target set by the travel target setter 52 and transmitting the data to the travel manager 50. The autonomous travel assistant 70 is capable of performing the above four functions not only before the start of autonomous travel as an initial process, but also during autonomous travel.

The autonomous travel assistant 70 also has (i) a function of generating an autonomous travel start instruction for causing the body 1 to start autonomous travel and transmitting the instruction to the travel manager 50, (ii) a function of transmitting to the travel manager 50 a travel instruction for instructing the body 1 to stop or change the travel speed, and (iii) a function of transmitting to the travel manager 50 an operation adjustment instruction for adjusting the operation of an implement (such as the cutting blade motor 14) provided for the body 1.

To perform the above functions, the autonomous travel assistant 70 includes a travel control condition manager 71, a travel target manager 72, a travel instruction generator 73, and a display information generator 74. The display information generator 74 has a function of creating a graphical user interface for the touchscreen 80 to display. Specifically, the display information generator 74 generates data on a display screen for the user to, for example, input, change, or select information or data to be handled by the autonomous travel assistant 70, and causes the touchscreen 80 to display the screen.

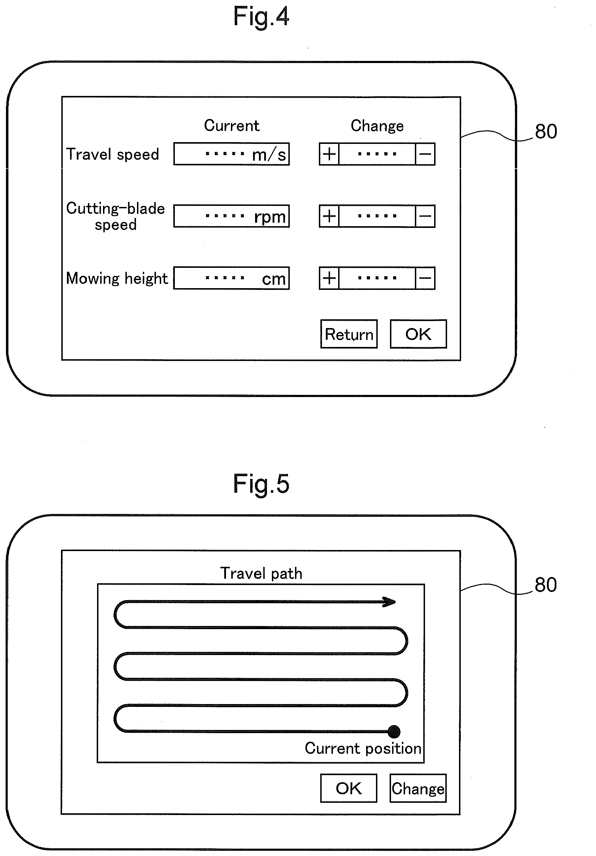

The travel control condition manager 71 manages the travel control conditions set by the travel control condition setter 53. Specifically, the travel control condition manager 71 manages a process by the human work manager of, for instance, (i) checking the current travel control conditions such as the travel speed, the cutting-blade speed, and the mowing height and (ii) changing the travel control conditions as necessary on the display screen illustrated in Fig. 4.

The travel target manager 72 manages the travel target (which is a travel path for the present embodiment) set by the travel target setter 52. Specifically, the travel target manager 72 manages a process by the human work manager of, for instance, checking the currently set travel path and changing the travel path as necessary on the display screen illustrated in Fig. 5. The travel target manager 72 also has (i) a function of creating a travel path on the basis of the inputted size of a work area and transmitting information on the travel path to the control device CU and (ii) a function of downloading information on a travel path created on another computer and transmitting the information to the control device CU.

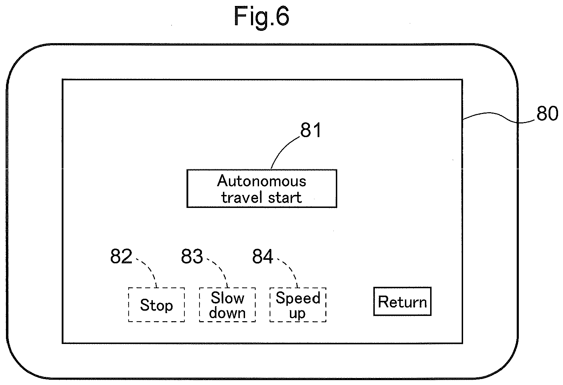

The travel instruction generator 73 is capable of, in response to an operation of the control terminal CT by the human work manager, transmitting to the travel manager 50 an autonomous travel start instruction for instructing the autonomous travel controller 54 to start autonomous travel of the body 1. The travel instruction generator 73 transmits an autonomous travel start instruction to the travel manager 50 in response to, for instance, the human work manager tapping the autonomous travel start button 81 on the display screen illustrated in Fig. 6. Starting autonomous travel activates the stop button 82, the slow-down button 83, and the speed-up button 84 such that the human work manager is able to control the operation of the mower with use of the control terminal CT.

The present embodiment is arranged to allow the human work manager to check the travel control conditions and the travel target before the display of the autonomous travel start button 81. This prevents the mower from starting autonomous travel without check of the travel control conditions and the travel target. The present embodiment may, however, be modified such that the travel instruction generator 73 transmits an autonomous travel start instruction to the travel manager 50 without the above check if, as a result of automatic comparison, the travel control conditions and travel target set for the control device CU match the desired travel control conditions (which may alternatively be their identification codes, for example) stored in advance in the travel control condition manager 71 of the control terminal CT and the desired travel target (which may alternatively be its identification code, for example) stored in advance in the travel target manager 72 of the control terminal CT.

## Claims

1. A work machine capable of autonomous travel, comprising:
a body (1);
a machine position calculating unit (51) configured to calculate a position of the work machine;
a travel target setter (52) configured to set a travel target for autonomous travel;
a travel control condition setter (53) configured to set at least one travel control condition for the autonomous travel;
an autonomous travel controller (54) configured to cause the body (1) to perform the autonomous travel based on the travel target and the position of the work machine;
a travel manager (50) configured to manage the travel target setter (52) and the travel control condition setter (53);
a driver section (4) including a driver's seat (3) at a front portion of the body (1);
a roll-over protection frame (15) standing behind the driver's seat (3) in the shape of an arch; and
a control terminal (CT) including:
an autonomous travel assistant (70) configured to exchange data with the travel manager (50) through data communication; and
a display (80) configured to show the at least one travel control condition,
wherein the autonomous travel assistant (70) is configured to download information on the at least one travel control condition set by the travel control condition setter (53), and to cause the display (80) to show the information on the at least one travel control condition, and
the travel manager (50) is configured to, in response to an autonomous travel start instruction from the autonomous travel assistant (70), instruct the autonomous travel controller (54) to start the autonomous travel,
**characterized in that** the control terminal (CT) is provided on the roll-over protection frame (15).

2. The work machine according to claim 1, wherein
the autonomous travel assistant (70) is configured to supply the travel manager (50) with travel control condition overwriting data for overwriting the at least one travel control condition set by the travel control condition setter (53).

3. The work machine according to claim 1, wherein
the control terminal (CT) is detachably attachable to the body (1).

4. The work machine according to claim 1, wherein
the at least one travel control condition includes at least one of a travel parameter, a work parameter, the travel target, or a travelable distance.

5. The work machine according to claim 1, wherein
the data communication is a wireless or wired data communication.

6. The work machine according to claim 2, wherein
the autonomous travel assistant (70) is configured to supply the travel manager (50) with the travel control condition overwriting data even during the autonomous travel.

7. The work machine according to claim 1, wherein
the display (80) is configured to, during the autonomous travel, show the at least one travel control condition set by the travel control condition setter (53) and the travel target set by the travel target setter (52).

8. The work machine according to claim 1, wherein
the travel target is a travel path created on the control terminal or downloaded with use of the control terminal (CT).

9. The work machine according to claim 1, wherein
the autonomous travel assistant (70) is capable of instructing the autonomous travel controller (54) through the travel manager (50) to (i) cause the body (1) to stop or change a travel speed thereof or (ii) adjust an operation of an implement provided for the body (1).

## Patentansprüche

1. Arbeitsmaschine, die in der Lage ist, autonom zu fahren, umfassend:
einen Aufbau (1),
einen Maschinenposition-Berechnungseinheit (51), die dazu ausgestaltet ist, eine Position der Arbeitsmaschine zu berechnen,
einen Fahrzielfestleger (52), der dazu ausgestaltet ist, ein Fahrziel zum autonomen Fahren festzulegen,
einen Fahrsteuerungsbedingungsfestleger (53), der dazu ausgestaltet ist, mindestens eine Fahrsteuerungsbedingung für das autonome Fahren festzulegen,
ein Steuergerät (54) für autonomes Fahren, das dazu ausgestaltet ist, den Aufbau (1) zu veranlassen, das autonome Fahren basierend auf dem Fahrziel und der Position der Arbeitsmaschine durchzuführen,
einen Fahrmanager (50), der dazu ausgestaltet ist, den Fahrzielfestleger (52) und den Fahrsteuerungsbedingungsfestleger (53) handzuhaben,
eine Fahrersektion (4), die einen Fahrersitz (3) an einem vorderen Abschnitt des Aufbaus (1) beinhaltet,
einen Überrollschutzrahmen (15), der hinter dem Fahrersitz (3) in Form eines Bogens steht,
und
ein Steuerendgerät (CT), das beinhaltet:
einen Assistenten (70) für autonomes Fahren, der dazu ausgestaltet ist, Daten mit dem Fahrmanager (50) durch Datenkommunikation auszutauschen, und
eine Anzeige (80), die dazu ausgestaltet ist, die mindestens eine Fahrsteuerungsbedingung anzuzeigen,
wobei der Assistent (70) für autonomes Fahren dazu ausgestaltet ist, Informationen über die mindestens eine Fahrsteuerungsbedingung herunterzuladen, die von dem Fahrsteuerungsbedingungsfestleger (53) festgelegt wurde, und die Anzeige (80) zu veranlassen, die Informationen über die mindestens eine Fahrsteuerungsbedingung anzuzeigen, und
der Fahrmanager (50) dazu ausgestaltet ist, als Reaktion auf eine Startanweisung zum autonomen Fahren von dem Assistenten (70) für autonomes Fahren (70) das Steuergerät (54) für autonomes Fahren anzuweisen, das autonome Fahren zu starten,
**dadurch gekennzeichnet, dass** das Steuerendgerät (CT) an dem Überrollschutzrahmen (15) vorgesehen ist.

2. Arbeitsmaschine nach Anspruch 1, wobei
der Assistent (70) für autonomes Fahren dazu ausgestaltet ist, den Fahrmanager (50) mit Fahrsteuerungsbedingungs-Überschreibungsdaten zu versorgen, um die mindestens eine Fahrsteuerungsbedingung zu überschreiben, die von dem Fahrsteuerungsbedingungsfestleger (53) festgelegt wurde.

3. Arbeitsmaschine nach Anspruch 1, wobei
das Steuerendgerät (CT) lösbar an dem Aufbau (1) anbringbar ist.

4. Arbeitsmaschine nach Anspruch 1, wobei
die mindestens eine Fahrsteuerungsbedingung mindestens einen von einem Fahrparameter, einem Arbeitsparameter, dem Fahrziel oder einer fahrbaren Entfernung beinhaltet.

5. Arbeitsmaschine nach Anspruch 1, wobei
die Datenkommunikation eine drahtlose oder drahtgebundene Datenkommunikation ist.

6. Arbeitsmaschine nach Anspruch 2, wobei
der Assistent (70) für autonomes Fahren dazu ausgestaltet ist, den Fahrmanager (50) mit den Fahrsteuerungsbedingungs-Überschreibungsdaten selbst während des autonomen Fahrens zu versorgen.

7. Arbeitsmaschine nach Anspruch 1, wobei
die Anzeige (80) dazu ausgestaltet ist, während des autonomen Fahrens die mindestens eine Fahrsteuerungsbedingung, die von dem Fahrsteuerungsbedingungsfestleger (53) festgelegt wurde, und das Fahrziel anzuzeigen, das von dem Fahrzielfestleger (52) festgelegt wurde.

8. Arbeitsmaschine nach Anspruch 1, wobei
das Fahrziel ein Fahrweg ist, der auf dem Steuerendgerät erstellt wurde oder unter Verwendung des Steuerendgeräts (CT) heruntergeladen wurde.

9. Arbeitsmaschine nach Anspruch 1, wobei
der Assistent (70) für autonomes Fahren in der Lage ist, das Steuergerät (54) für autonomes Fahren durch den Fahrmanager (50) anzuweisen, (i) den Aufbau (1) zu veranlassen, anzuhalten oder eine Fahrgeschwindigkeit davon zu ändern, oder (ii) einen Betrieb eines Geräts einzustellen, das für den Aufbau (1) vorgesehen ist.

## Revendications

1. Machine de travail en mesure de se déplacer de manière autonome, comprenant :
un corps (1) ;
une unité de calcul de position de machine (51) configurée pour calculer une position de la machine de travail ;
un dispositif de définition de cible de déplacement (52) configuré pour définir une cible de déplacement pour un déplacement autonome ;
un dispositif de définition de conditions de commande de déplacement (53) configuré pour définir au moins une condition de commande de déplacement pour le déplacement autonome ;
un dispositif de commande de déplacement autonome (54) configuré pour amener le corps (1) à effectuer le déplacement autonome sur la base de la cible de déplacement et de la position de la machine de travail ;
un gestionnaire de déplacement (50) configuré pour gérer le dispositif de définition de cible de déplacement (52) et le dispositif de définition de conditions de commande de déplacement (53) ;
une section conducteur (4) comportant un siège de conducteur (3) dans une partie avant du corps (1) ;
un cadre de protection contre le renversement (15) situé derrière le siège de conducteur (3) ayant la forme d'un arc ; et
un terminal de commande (CT) comportant :
un assistant de déplacement autonome (70) configuré pour échanger des données avec le gestionnaire de déplacement (50) par communication de données ; et
un affichage (80) configuré pour présenter l'au moins une condition de commande de déplacement,
dans laquelle l'assistant de déplacement autonome (70) est configuré pour télécharger des informations sur l'au moins une condition de commande de déplacement définie par le dispositif de définition de conditions de commande de déplacement (53), et pour amener l'affichage (80) à présenter les informations sur l'au moins une condition de commande de déplacement, et
le gestionnaire de déplacement (50) est configuré pour, en réponse à une instruction de démarrage de déplacement autonome en provenance de l'assistant de déplacement autonome (70), ordonner au dispositif de commande de déplacement autonome (54) de démarrer le déplacement autonome,
**caractérisée en ce que** le terminal de commande (CT) est prévu sur le cadre de protection contre le renversement (15).

2. Machine de travail selon la revendication 1, dans laquelle
l'assistant de déplacement autonome (70) est configuré pour fournir au gestionnaire de déplacement (50) des données d'écrasement de condition de commande de déplacement pour écraser l'au moins une condition de commande de déplacement définie par le dispositif de définition de conditions de commande de déplacement (53).

3. Machine de travail selon la revendication 1, dans laquelle
le terminal de commande (CT) peut être fixé au corps (1) de manière amovible.

4. Machine de travail selon la revendication 1, dans laquelle
l'au moins une condition de commande de déplacement comporte au moins un parmi un paramètre de déplacement, un paramètre de travail, la cible de déplacement, ou une distance pouvant être parcourue.

5. Machine de travail selon la revendication 1, dans laquelle
la communication de données est une communication de données sans fil ou câblée.

6. Machine de travail selon la revendication 2, dans laquelle
l'assistant de déplacement autonome (70) est configuré pour fournir au gestionnaire de déplacement (50) les données d'écrasement de condition de commande de déplacement même pendant le déplacement autonome.

7. Machine de travail selon la revendication 1, dans laquelle
pendant le déplacement autonome, l'affichage (80) est configuré pour présenter l'au moins une condition de commande de déplacement défini par le dispositif de définition de conditions de commande de déplacement (53) et la cible de déplacement définie par le dispositif de définition de cible de déplacement (52).

8. Machine de travail selon la revendication 1, dans laquelle
la cible de déplacement est une trajectoire de déplacement créée sur le terminal de commande ou téléchargée à l'aide du terminal de commande (CT).

9. Machine de travail selon la revendication 1, dans laquelle
l'assistant de déplacement autonome (70) est en mesure d'ordonner au dispositif de commande de déplacement autonome (54), par l'intermédiaire du gestionnaire de déplacement (50), (i) d'amener le corps (1) à s'arrêter ou à modifier sa vitesse de déplacement ou (ii) à régler le fonctionnement d'un outil fourni pour le corps (1).
